# EUROPÄISCHE PATENTSCHRIFT

(11) **EP 4 247 554 B1**
(45) Veröffentlichungstag und Bekanntmachung des Hinweises auf die Patenterteilung: **12.06.2024**
(21) Anmeldenummer: 21802385.1
(22) Anmeldetag: 16.11.2021
(51) Int. Cl.: B01J 35/58, B01J 23/46, C01B 21/26, D04B 1/14, D04B 1/12

(54) **EDELMETALLNETZ FÜR DIE KATALYSIERUNG VON GASPHASENREAKTIONEN**
PURE METAL NETWORK FOR CATALYSING GAS PHASE REACTIONS
GRILLE MÉTALLIQUE PRÉCIEUX POUR LA CATALYSE DES RÉACTIONS EN PHASE GAZEUSE

(30) Priorität: 17.11.2020 EP 20000416
(43) Veröffentlichungstag der Anmeldung: 27.09.2023
(73) Patentinhaber: Umicore AG & Co. KG, 63457 Hanau-Wolfgang (DE)
(72) Erfinder: BORN, Dirk, 63505 Langenselbold (DE); PRASCH, Dieter, 36396 Steinau (DE); WISER, Artur, 60486 Frankfurt (DE)
(86) Internationale Anmeldenummer: PCT/EP2021/081805
(87) Internationale Veröffentlichungsnummer: WO 2022/106395

(56) Entgegenhaltungen:
- EP-A1- 0 606 535
- DE-A1- 4 423 714
- DE-A1- 10 105 624

## Beschreibung

Die Erfindung betrifft gestrickte Edelmetallnetze mit neuer Strickstruktur für die katalytische Oxidation von Ammoniak, insbesondere für die Oxidation zu NO, wie sie für die Salpetersäureproduktion verwendet wird.

Edelmetallkatalysierte Gasreaktionen wie die Oxidation von Ammoniak mit Luftsauerstoff in der Salpetersäureproduktion (Ostwald-Verfahren) oder die Umsetzung von Ammoniak mit Methan in Anwesenheit von Sauerstoff zu Blausäure (Andrussow-Verfahren) haben seit langem erhebliche industrielle Bedeutung erlangt, werden durch sie doch im großtechnischen Maßstab Basischemikalien für die chemische Industrie und für die Düngemittelproduktion bereitgestellt (Andreas Jess, Peter Wasserscheid: Chemical Technology; Wiley-VCH Verlag, Weinheim 2013, Kapitel 6.4.)

Kern dieser heterogen katalysierten Gasreaktionen sind Edelmetallkatalysatoren in Form gasdurchlässiger räumlicher Gebilde, an bzw. in denen die Reaktion abläuft. Hierbei haben sich seit geraumer Zeit Edelmetallnetze in Form von Geweben (DE4028916 C2) oder Gestricken (EP0364153 B1, DE4206199 C1) aus feinen Edelmetalldrähten durchgesetzt.

Die Katalysatornetze werden dabei üblicherweise in einem Strömungsreaktor in einer Ebene senkrecht zur Strömungsrichtung des Gasgemisches angeordnet. Auch kegelförmige Anordnungen sind bekannt. Es werden zweckmäßigerweise mehrere Edelmetallnetze hintereinander angeordnet und zu einem Netzstapel zusammengefasst.

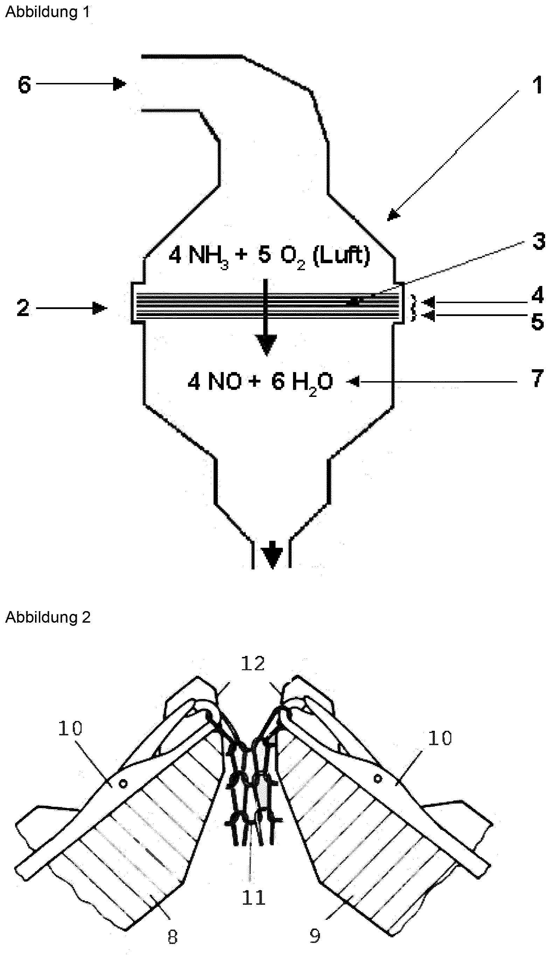

Abbildung 1 zeigt am Beispiel der katalytischen Ammoniakoxidation (Ostwald-Verfahren) schematisch den Reaktor mit dem darin verbauten Netzstapel, dessen Funktion im Folgenden beschrieben wird:
In der Reaktionszone (2) des Strömungsreaktors (1) ist in einer Ebene senkrecht zur Strömungsrichtung der Netzstapel (3), der aus mehreren hintereinander liegenden Katalysatornetzen (4) auf der Einlassseite und nachgeschalteten Trenn- und Getternetzen (5) besteht, angeordnet. Dieser Netzstapel wird durch Einklemmen in seiner Position gehalten.

Das Reaktionsgas (Ammoniak-Luftsauerstoffgemisch mit einem Ammoniakgehalt von 9 - 13 Vol.-%) (6) durchströmt unter atmosphärischem oder erhöhtem Druck den Netzstapel (3), wobei im Eintrittsbereich die Zündung des Gasgemisches erfolgt und die Verbrennungsreaktion zu Stickstoffmonoxid (NO) und Wasser die gesamte Reaktionszone (2) erfasst:

4 NH₃ + 5O₂ (Luft) → 4 NO + 6 H₂O

Unerwünschte Nebenreaktionen sind die Oxidation des Ammoniaks zu Stickstoff (N₂) und Lachgas (N₂O), wobei ersteres lediglich die Ausbeute an NO verringert, letzteres jedoch zudem ein starkes Treibhausgas darstellt:

4 NH₃ + 3 O₂ (Luft) → 2 N₂ + 6 H₂O

4 NH₃ + 4 O₂ (Luft) → 2 N₂O + 6 H₂O

Das NO im abströmenden Reaktionsgasgemisch reagiert in der Folge mit dem überschüssigen Luftsauerstoff zu NO₂:

2 NO + O₂ → 2 NO₂

Eine unerwünschte Nebenreaktion hierbei ist die Bildung von Lachgas:

2 NO + ½ O₂ → 2 N₂O

Das NO₂ reagiert wiederum in einer nachgeschalteten Absorption mit Wasser zu Salpetersäure, welche etwa der Düngemittelproduktion zugeführt wird:

3 NO₂ + H₂O → 2 HNO₃ + NO

Für die Herstellung der Edelmetallnetze werden Edelmetalldrähte aus Platin, Rhodium oder aus Legierungen dieser Metalle mit anderen Edel- oder Unedelmetallen verwendet. Typisch sind hierbei Platin-Rhodium- oder Platin-Palladium-Rhodium-Legierungen mit 88 bis 97 Gew.-% Platin. Platin ist erforderlich, um einen möglichst hohen Ammoniak-Umsatz zu erzielen, Rhodium verbessert die Selektivität zu NO, reduziert dadurch die Emission von Lachgas, und erhöht die mechanische Festigkeit [G. R. Maxwell: "Synthetic Nitrogen Products - A Practical Guide to the Products and Processes", Springer Science + Business Media, Inc. 2005, Seite 220]. Palladium wiederum wird verwendet, um, abhängig von den Edelmetallpreisen, die Edelmetallkosten durch Ersatz von Platin zu senken.

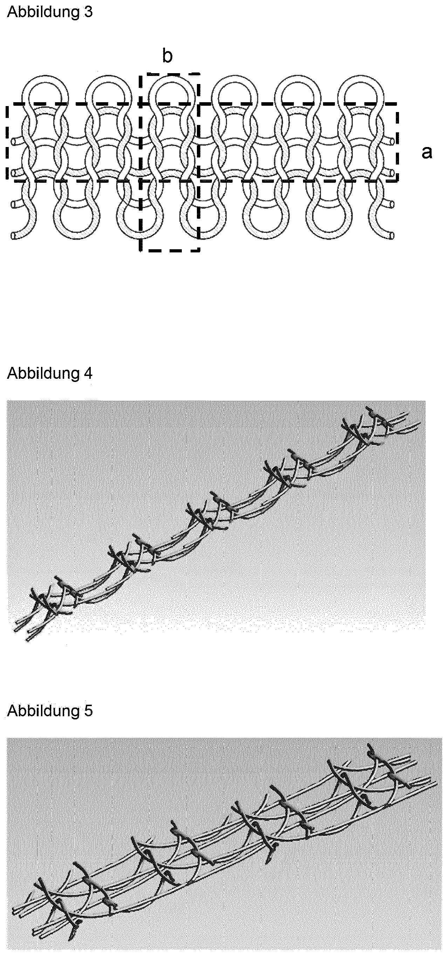

Für das Stricken von Edelmetallnetzen werden Flachstrickmaschinen verwendet. Der Aufbau der Flachstrickmaschine wird in Abbildung 2 verdeutlicht. Die Flachstrickmaschine besitzt ein vorderes (8) und ein hinteres Nadelbett (9), in welche die Zungennadeln (10) verbaut sind. Die Zungennadeln durchlaufen je nach Programmierung der Maschine unterschiedliche Stellungen. Die Programmierung gibt demnach die Struktur des Gestricks vor. Ein Beispiel für ein Gestrick zeigt Abbildung 3: die Linie, in der das Garn oder der Draht verläuft, wird als Reihe (a) bezeichnet, die über eine Zungennadel miteinander verschlungenen Maschen bilden ein Maschenstäbchen (b). Eine Besonderheit der Flachstrickmaschine gegenüber anderen gewebebildenden Maschinen ist, dass man synchron auf dem vorderen als auch auf dem hinteren Nadelbett unabhängig voneinander Gestricke bilden kann (Einbettware). Darüber hinaus können Abstandsgestricke (Zweibettware) gebildet werden, bei denen der Faden im Wechsel vorne und hinten Maschen oder Fang bildet (EP1358010 B2). Das Gestrick wird nach unten zwischen den beiden Nadelbetten abgestrickt (11). Dies geschieht durch sukzessives Abschlagen der einzelnen geformten Maschen über die Abschlagsstellung und Abschlagstegkante (12).

Gestrickte Edelmetallnetze besitzen gegenüber gewebten Edelmetallnetzen eine Reihe von Vorteilen, weswegen sie heute im industriellen Einsatz bevorzugt werden. Zum einen bietet die Stricktechnik die Möglichkeit einer hohen Flexibilität in Hinblick auf Strickmuster, verwendete Drahtstärken und resultierendes Flächengewicht. Zum anderen lassen sich die Edelmetallgestricke ökonomischer herstellen, da bei der Stricktechnik kürzere Rüstzeiten als bei der Webtechnik anfallen. Dies bedingt insbesondere eine erheblich reduzierte Edelmetallbindung in der Produktion. Zudem können auf Flachstrickmaschinen Edelmetallnetze beliebiger Länge hergestellt werden. Die minimale Maschenweite, also die Dichte des Gestricks, ist jedoch durch die maximale Anzahl an Zungennadeln pro gegebener Breite begrenzt.

Im Folgenden werden die wesentlichen Begriffe definiert:
Als *Edelmetall* sollen Gold, Silber, sowie die Platinmetalle (Ru, Rh, Pd, Os, Ir, Pt) gelten.

Als *Katalysatornetze* werden die Netze bezeichnet, deren katalytische Aktivität für die Umsetzung von Ammoniak mit Sauerstoff genutzt wird.

Als *Getternetze* werden die Netze bezeichnet, die im Reaktionsgasfluß ausgangsseitig zu den Katalysatornetzen eingebaut sind, um volatiles Platinoxid zwecks Recycling durch Legierungsbildung mit dem Palladium der Getternetze einzufangen und damit den Platinverlust zu minimieren.

Als *Edelmetallnetze* wird die Gesamtheit der Katalysator- und Getternetze bezeichnet.

Als *Trennnetze* werden Netze aus hochtemperaturstabilem Stahl bezeichnet, welche zwischen den Edelmetallnetzen verbaut werden, um ein Zusammensintern der Edelmetallnetze zu verhindern.

Der *Netzstapel* besteht aus den Katalysatornetzen auf der Einlaßseite des Netzstapels, und optional den Getternetzen auf der Auslaßseite des Netzstapels, sowie den Trennnetzen, die ggf. zwischen den Edelmetallnetzen verbaut werden.

Als *Strömungsreaktorwird* der Reaktor bezeichnet, der dafür sorgt, dass das Reaktionsgas über den in ihm verbauten Netzstapel geleitet wird.

Über die *Zungennadeln* wird der Strickprozeß durchgeführt. Für jedes Maschenstäbchen eines Gestricks wird eine Zungennadel benötigt.

Nadelbett, Einbettware, Zweibettware, Polfaden: Das *Nadelbett* ist das Element der Flachstrickmaschine, über das die Zungennadeln geführt werden. Die Flachstrickmaschine verfügt üblicherweise über ein vorderes und ein hinteres Nadelbett, auf welchem jeweils ein Gestrick gestrickt werden kann (*Einbettware*). Werden diese beiden Gestricke während des Strickvorgangs über *Polfäden* zusammengestrickt, ist das neu entstehende Gestrick eine *Zweibettware.*

Ein *Henkel* entsteht durch eine Verbindung von zwei Schleifen. *Fang* ist ein Henkel, der bei einer R/R-Bindung von einem Nadelbett zum gegenüberliegenden Nadelbett eingelegt wird. Die Begriffe 'Henkel', 'Schleife' und 'R/R-Bindung' sind dem Fachmann bekannt.

Maschenreihe und -stäbchen: Die nacheinander durch den gleichen Faden gebildeten Maschen werden in ihrer Gesamtheit als *Maschenreihe* bezeichnet. Die parallel verlaufenden Maschenreihen werden durch Verschlingung der Maschen eines *Maschenstäbchens* zusammengehalten.

Üblicherweise werden die Edelmetallnetze in einer Maschenbildungsstruktur gestrickt, bei dem an jeder Zungennadelposition mit dem gleichen Draht eine Masche geformt wird (Abbildung 4) oder zwei Drähte (Draht A und Draht B) gemeinsam in einer Reihe verstrickt werden und jeweils abwechselnd an den Zungennadelpositionen ein Draht eine Masche formen, und der andere Draht ohne Maschenbildung vorbei gelassen wird (Abbildung 5). Letzteres wird als Flottung bezeichnet und auf beiden Seiten durch eine Masche begrenzt. Auf diese Weise werden zwei Drähte miteinander verstrickt.

Die Erfinder haben überraschend festgestellt, dass die Strickstruktur, insbesondere des ersten Katalysatornetzes, einen Einfluss auf die Selektivität des Katalysators für die Oxidation von Ammoniak zu N₂O hat. Aufgabe der vorliegenden Erfindung war deshalb, eine Strickstruktur zu finden, die eine geringere Selektivität für die N₂O-Bildung aufweist, als Edelmetallnetzstrukturen gemäß dem Stand der Technik.

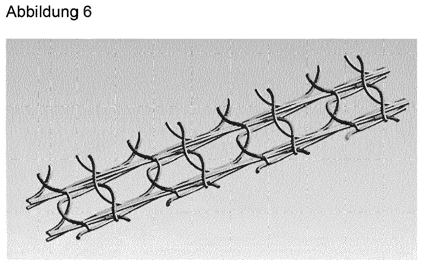

So wurden Gestricke hergestellt, bei denen zwei oder mehr Drähte gemeinsam verstrickt werden und jeweils abwechselnd ein Draht pro Nadelposition für die Maschenbildung verwendet wird, während die anderen Drähte als Flottung ohne Maschenbildung vorbeigeführt werden. Dadurch erfolgt, trotz Flottung, an jeder Zungennadelposition eine Maschenbildung; die Dichte des Gestricks wird trotz gleicher Maschenanzahl erhöht. Damit lässt sich, bei gegebener Anzahl von Zungennadeln pro Breite, die Dichte des Gestricks weiter erhöhen. Abbildung 6 zeigt ein Beispiel mit drei Flottungen, d.h. auf jede Masche kommen drei vorbeiführende Drähte. Das Gestrick besteht damit aus vier miteinander verstrickten Drähten innerhalb einer Maschenreihe. Diese Gestricke mit mehr als einer Flottung unter gleichzeitiger Maschenbildung an jeder Nadelposition weisen überraschenderweise eine geringere Selektivität zur Oxidation von Ammoniak zu N₂O (Lachgas) auf. Dies ist überraschend, da selbst im Vergleich zum Stand der Technik mit gleicher Drahtoberfläche und -menge diese Verbesserung zu beobachten ist.

Die Aufgabe wird deshalb durch ein gestricktes Edelmetallnetz gelöst, wobei das Edelmetallnetz n Drähte pro Reihe umfasst und mindestens zwei, höchstens (n-1) Flottungen pro Maschenstäbchen aufweist, wobei gilt: n ≥ 3. Es werden also an jeder Zungennadelposition nur ein Teil der Drähte von der Zungennadel erfasst, um mit der vorherigen Masche innerhalb des gleichen Maschenstäbchens verschlungen zu werden. Die anderen Drähte werden unverschlungen bis zur nächsten Masche innerhalb der gleichen Reihe weitergeleitet. Üblicherweise erfolgt hier die Verschlingung anderer Drähte.

Bevorzugt umfasst das erfindungsgemäße Edelmetallnetz n Drähte pro Reihe und (n-1) Flottungen pro Maschenstäbchen, wobei gilt: n ≥ 3, d.h. es wird an jeder Zungennadelposition nur ein Draht von der Zungennadel erfasst, um mit der vorherigen Masche innerhalb des gleichen Maschenstäbchens verschlungen zu werden; die anderen Drähte werden unverschlungen bis zur nächsten Masche in der gleichen Reihe vorbeigeführt, an welcher der nächste Draht für die Verschlingung ausgewählt wird. Wird eine feste Reihenfolge der Drähte für die Verschlingung gewählt, so ist der Abstand von einer Verschlingung bis zur nächsten Verschlingung für alle Drähte gleich.

Besonders bevorzugt ist n ≥ 4, d.h. das erfindungsgemäße Edelmetallnetz umfasst mindestens vier Drähte in einer Reihe.

Die Anzahl der Drähte pro Reihe lässt sich weiter erhöhen, jedoch wird der Strickvorgang damit aufwendiger, so dass eine höhere Anzahl an Drähten pro Reihe weniger praktikabel ist. Aus diesem Grund werden bevorzugt 4 Drähte pro Reihe verwendet, von denen an jeder Maschenposition 3 Drähte unverschlungen vorbeigeführt werden und ein Draht zwecks Maschenbildung verschlungen wird.

Um die Komplexität der Herstellung, und damit die Kosten, zu minimieren, sind die vom erfindungsgemäßen Edelmetallnetz umfassten Drähte von gleicher Zusammensetzung und gleichen Durchmessers.

Eine Variante des erfindungsgemäßen Edelmetallnetzes besteht aus Draht aus Platin oder einer Platinlegierung, wobei letztere bevorzugt mindestens 75% Platin enthält. Das Edelmetallnetz kann in dem Fall als Katalysatornetz für die Ammoniakoxidation verwendet werden, wobei der Vorteil der besseren Selektivität, wie oben beschrieben, genutzt wird.

Eine weitere erfindungsgemäße Variante des Edelmetallnetzes besteht aus Draht aus Palladium oder einer Palladiumlegierung, wobei letztere bevorzugt mindestens 75% Palladium enthält. Diese Variante ist als Getternetz verwendbar. Die erhöhte Oberfläche des Edelmetallnetzes kann die Platin-Rückgewinnungsquote verbessern.

Eine weitere erfindungsgemäße Edelmetallnetzvariante umfasst mindestens einen Edelmetalldraht aus Platin oder einer Platinlegierung, und mindestens einen Edelmetalldraht aus Palladium oder einer Palladiumlegierung. Diese Drähte sind, wie oben beschrieben gemeinsam verstrickt; das Edelmetallnetz ist also Katalysatornetz, welches gleichzeitig die Funktionalität eines Getternetzes beinhaltet. Es kann als, in Gasströmungsrichtung gesehen, letztes Katalysatornetz eingesetzt werden

Weiterhin umfasst die Erfindung ein Verfahren zur katalytischen Oxidation von Ammoniak, die Schritte enthaltend
- bereitstellen von erfindungsgemäßen Edelmetallnetzen
- Einbau eines Netzstapels (3), beinhaltend ein oder mehrere erfindungsgemäße Edelmetallnetze (4), in einen Strömungsreaktor (1), wobei Katalysatornetze (4) auf der Gaseinlaßseite des Netzstapels, und Getternetze (5) auf der Gasauslaßseite des Netzstapels angeordnet sind.
- Zuführung eines Reaktionsgases (6), beinhaltend Ammoniak und Sauerstoff, bei einer Temperatur im Strömungsreaktor (1) zwischen 500°C und 1300°C und einem Druck zwischen 0,1 MPa und 1,4 MPa, wobei das Ammoniak katalytisch mit dem Sauerstoff reagiert und NO erhalten wird, welches für die Salpetersäureherstellung verwendet werden kann.

Bei einer bevorzugten Verfahrensvariante ist ein erfindungsgemäßes Platin-haltiges Edelmetallnetz auf der Gaseinlaßseite des Netzstapels als äußerstes Edelmetallnetz installiert.

Weiter bevorzugt ist eine Verfahrensvariante, bei der ein erfindungsgemäßes Edelmetallnetz, umfassend sowohl ein oder mehrere Platin-haltige Drähte, als auch ein oder mehrere Palladium-haltige Drähte, auf der Gasauslaßseite des Netzstapels als äußerstes Edelmetallnetz installiert ist.

Weiterhin können auf der Gasauslaßseite erfindungsgemäße Palladium-haltige Edelmetallnetze dem Netzstapel nachgeschaltet sein und so als Getternetz zur Anwendung kommen, um flüchtiges Platinoxid der Katalysatornetze zurück zu gewinnen und dem Edelmetallrecycling zuführen zu können.

Die Wirkung der Erfindung soll anhand folgender Beispiele gezeigt werden:

### Beispiel 1

Ein Edelmetallnetz wird als einschichtiges Gestrick (Einbettware) mit drei Flottungen auf einer Flachstrickmaschine gestrickt. Zur Verwendung kommt Draht der Zusammensetzung PtRh5 mit 85 µm Drahtdurchmesser.

### Vergleichsbeispiel 1

Ein Edelmetallnetz wird als zweischichtiges Abstandsgestrick (Zweibettware) mit einfacher Flottung auf einer Flachstrickmaschine gestrickt. Zur Verwendung kommt Draht der Zusammensetzung PtRh5 mit 85µm Drahtdurchmesser.

### Vergleichsbeispiel 2

Ein einschichtiges Gestrick (Einbettware) mit einfacher Flottung wird auf einer Flachstrickmaschine gestrickt. Zur Verwendung kommt Draht der Zusammensetzung PtRh5 mit 100 µm Drahtdurchmesser.

### Testung

Die Edelmetallnetze werden folgendermaßen vermessen:
Das Edelmetallnetz wird einem Netzstapel A, bestehend aus 4 einschichtigen und 1 zweischichtigen (Zweibettware) Katalysatornetzen aus PtRh5, vorgeschaltet in einen Versuchsreaktor derart eingebaut, dass das zweischichtige Katalysatornetz des Netzstapels A sich zwischen dem zu vermessenen Edelmetallnetz und den einschichtigen Katalysatornetzen befindet. Für alle drei vermessene Edelmetallnetze wird der gleiche Netzstapel A verwendet, so dass die gesamte eingesetzte Edelmetallmenge m in allen drei Fällen nahezu identisch ist. Sie betrug für Beispiel 1 m=47,2g, für Vergleichsbeispiel 1 m=46,7g und für Vergleichsbeispiel 3 m=47,0g, womit bei allen drei Beispielen 47g ± 0,6% Edelmetall verwendet wurden.

Der Versuchsreaktor wird dann mit einem Reaktionsgasgemisch mit 10,5 Volumen-% Ammoniak, Rest Luft, bei einem Druck von 500 kPa durchströmt. Dann wird die Temperatur vor dem ersten Katalysatornetz Tᵥₒᵣ eingestellt (Reaktionsgastemperatur) und die N₂O-Konzentration nach Netzstapel gemessen. Der Ammoniak wurde stets vollständig umgesetzt, die Selektivität zu NO betrug 95 bis 96%.

Der restliche Anteil des Ammoniaks wird zu Stickstoff (N₂) und Lachgas (N₂O) umgesetzt.

Tabelle 1 zeigt die gemessene Konzentration an Lachgas für verschiedene Temperaturen vor dem ersten Katalysatornetz (Reaktionsgastemperatur) Tᵥₒᵣ.

| Tᵥₒᵣ [°C] | Beispiel 1 | Vergleichsbeispiel 1 | Vergleichsbeispiel 2 |
|---|---|---|---|
| 160 | 1229 Vol.-ppm | 1364 Vol.-ppm | 1302 Vol.-ppm |
| 175 | 1126 Vol.-ppm | 1257 Vol.-ppm | 1239 Vol.-ppm |
| 192 | 1058 Vol.-ppm | 1145 Vol.-ppm | 1165 Vol.-ppm |

Hieraus ist zu erkennen, dass das erfindungsgemäße Edelmetallnetz (Beispiel 1) zu geringeren Lachgas-Emissionen führt als das Vergleichsbeispiel 1 und 2.

## Patentansprüche

1. gestricktes Edelmetallnetz, **dadurch gekennzeichnet, dass** das Edelmetallnetz n Drähte pro Reihe umfasst und mindestens zwei, höchstens (n-1) Flottungen pro Maschenstäbchen aufweist, wobei gilt: n ≥ 3.

2. Edelmetallnetz gemäß Anspruch 1, **dadurch gekennzeichnet, dass** das Edelmetallnetz n Drähte pro Reihe umfasst und (n-1) Flottungen pro Maschenstäbchen aufweist, wobei gilt: n ≥ 3

3. Edelmetallnetz gemäß Anspruch 1 oder 2, **dadurch gekennzeichnet, dass** n ≥ 4 ist.

4. Edelmetallnetz gemäß einem oder mehreren der Ansprüche 1 bis 3, **dadurch gekennzeichnet, dass** alle n Drähte gleicher Zusammensetzung und gleichen Durchmessers sind.

5. Edelmetallnetz gemäß einem oder mehreren der Ansprüche 1 bis 4, **dadurch gekennzeichnet dass** die Edelmetalldrähte aus Platin oder einer Platinlegierung bestehen

6. Edelmetallnetz gemäß Anspruch 5, **dadurch gekennzeichnet dass** die Edelmetalldrähte aus einer Platinlegierung mit mindestens 75% Platin bestehen.

7. Edelmetallnetz gemäß einem oder mehreren der Ansprüche 1 bis 4, **dadurch gekennzeichnet dass** die Edelmetalldrähte aus Palladium oder einer Palladiumlegierung bestehen

8. Edelmetallnetz gemäß Anspruch 9, **dadurch gekennzeichnet dass** der Edelmetalldraht oder die Edelmetalldrähte aus einer Palladiumlegierung mit mindestens 75% Palladium bestehen.

9. Edelmetallnetz gemäß einem oder mehreren der Ansprüche 1 bis 3, **dadurch gekennzeichnet dass** mindestens ein Edelmetalldraht des Edelmetallnetzes aus Platin oder einer Platinlegierung besteht, und mindestens ein Edelmetalldraht des Edelmetallnetzes aus Palladium oder einer Palladiumlegierung besteht.

10. Verfahren zur katalytischen Oxidation von Ammoniak, die Schritte enthaltend
• bereitstellen von Edelmetallnetzen gemäß einem oder mehreren der Ansprüche 1 bis 9
• Einbau eines Netzstapels (3) beinhaltend Edelmetallnetze (3) entsprechend einem oder mehreren der Ansprüche 1 bis 9, in einen Strömungsreaktor (1), wobei Katalysatornetze (4) auf der Gaseinlaßseite des Netzstapels, und Getternetze (5) auf der Gasauslaßseite des Netzstapels angeordnet sind.
• Zuführung eines Gases (6) beinhaltend Ammoniak und Sauerstoff bei einer Temperatur im Strömungsreaktor (1) zwischen 500°C und 1300°C und einem Druck zwischen 0,1 MPa und 1,4 MPa

11. Verfahren gemäß Anspruch 10, **dadurch gekennzeichnet, dass** ein Edelmetallnetz gemäß Anspruch 5 oder 6 als äußerstes Edelmetallnetz auf der Gaseinlaßseite des Netzstapels zur Anwendung kommt und somit als erstes der Edelmetallnetze vom Reaktionsgas durchströmt wird.

12. Verfahren gemäß Anspruch 10 oder 11, **dadurch gekennzeichnet, dass** ein Edelmetallnetz gemäß Anspruch 9 als äußerstes Edelmetallnetz auf der Gasauslaßseite des Katalysatornetzstapels zur Anwendung kommt und somit als letztes der Katalysatornetze vom Reaktionsgas durchströmt wird.

13. Verfahren gemäß einem oder mehreren der Ansprüche 10 bis 12, **dadurch gekennzeichnet, dass** mindestens ein Edelmetallnetz gemäß Anspruch 7 oder 8 auf der Gasauslaßseite des Edelmetallnetzstapels als Getternetz zur Anwendung kommt und somit nach den Katalysatornetzen vom Reaktionsgas durchströmt wird.

## Claims

1. Knitted precious metal mesh, **characterized in that** the precious metal mesh comprises n wires per row and at least two, at most (n-1) float stitches per wale, wherein: n ≥ 3.

2. Precious metal mesh according to claim 1, **characterized in that** the precious metal mesh comprises n wires per row and (n-1) float stitches per wale, wherein: n ≥ 3.

3. Precious metal mesh according to claim 1 or 2, **characterized in that** n ≥ 4.

4. Precious metal mesh according to one or more of claims 1 to 3, **characterized in that** all n wires are of the same composition and diameter.

5. Precious metal mesh according to one or more of claims 1 to 4, **characterized in that** the precious metal wires consist of platinum or a platinum alloy.

6. Precious metal mesh according to claim 5, **characterized in that** the precious metal wires consist of a platinum alloy having at least 75% platinum.

7. Precious metal mesh according to one or more of claims 1 to 4, **characterized in that** the precious metal wires consist of palladium or a palladium alloy.

8. Precious metal mesh according to claim 9, **characterized in that** the precious metal wire or the precious metal wires consist of a palladium alloy having at least 75% palladium.

9. Precious metal mesh according to one or more of claims 1 to 3, **characterized in that** at least one precious metal wire of the precious metal mesh consists of platinum or a platinum alloy, and at least one precious metal wire of the precious metal mesh consists of palladium or a palladium alloy.

10. Method for the catalytic oxidation of ammonia, the steps comprising
• providing precious metal meshes according to one or more of claims 1 to 9
• installing a mesh stack (3) containing precious metal meshes (3) according to one or more of claims 1 to 9 in a flow reactor (1), wherein catalyst meshes (4) are arranged on the gas inlet side of the mesh stack and getter meshes (5) are arranged on the gas outlet side of the mesh stack
• supplying a gas (6) containing ammonia and oxygen at a temperature in the flow reactor (1) of between 500°C and 1300°C and at a pressure of between 0.1 MPa and 1.4 MPa.

11. Method according to claim 10, **characterized in that** a precious metal mesh according to claim 5 or 6 is used as the outermost precious metal mesh on the gas inlet side of the mesh stack and is thus the first of the precious metal meshes through which the reaction gas flows.

12. Method according to claim 10 or 11, **characterized in that** a precious metal mesh according to claim 9 is used as the outermost precious metal mesh on the gas outlet side of the catalyst mesh stack and is thus the last of the catalyst meshes through which the reaction gas flows.

13. Method according to one or more of claims 10 to 12,
**characterized in that** at least one precious metal mesh according to claim 7 or 8 is used on the gas outlet side of the precious metal mesh stack as a getter mesh and the reaction gas thus flows therethrough after the catalyst meshes.

## Revendications

1. Filet en métal précieux tricoté, **caractérisé en ce que** le filet en métal précieux comprend n fils par rang et présente au moins deux, au maximum (n-1) flottages par colonne de mailles, dans lequel : n ≥ 3.

2. Filet en métal précieux selon la revendication 1, **caractérisé en ce que** le filet en métal précieux comprend n fils par rang et présente (n-1) flottages par colonne de mailles, dans lequel : n ≥ 3.

3. Filet en métal précieux selon la revendication 1 ou 2,
**caractérisé en ce que** n ≥ 4.

4. Filet en métal précieux selon l'une ou plusieurs des revendications 1 à 3, **caractérisé en ce que** tous les n fils sont de même composition et de même diamètre.

5. Filet en métal précieux selon l'une ou plusieurs des revendications 1 à 4, **caractérisé en ce que** les fils en métal précieux sont constitués de platine ou d'un alliage de platine.

6. Filet en métal précieux selon la revendication 5, **caractérisé en ce que** les fils en métal précieux sont constitués d'un alliage de platine comportant au moins 75 % de platine.

7. Filet en métal précieux selon l'une ou plusieurs des revendications 1 à 4, **caractérisé en ce que** les fils en métal précieux sont constitués de palladium ou d'un alliage de palladium.

8. Filet en métal précieux selon la revendication 9, **caractérisé en ce que** le fil en métal précieux ou les fils en métal précieux sont constitués d'un alliage de palladium comportant au moins 75 % de palladium.

9. Filet en métal précieux selon l'une ou plusieurs des revendications 1 à 3, **caractérisé en ce qu'**au moins un fil en métal précieux du filet en métal précieux est constitué de platine ou d'un alliage de platine, et au moins un fil en métal précieux du filet en métal précieux est constitué de palladium ou d'un alliage de palladium.

10. Procédé permettant l'oxydation catalytique d'ammoniac, les étapes consistant à
• fournir des filets en métal précieux selon l'une ou plusieurs des revendications 1 à 9,
• installer, dans un réacteur à écoulement (1), un empilement de filets (3) contenant des filets en métal précieux (3) correspondant à l'une ou plusieurs des revendications 1 à 9, dans lequel des filets catalytiques (4) sont disposés sur le côté entrée de gaz de l'empilement de filets, et des filets de type getter (5) sont disposés sur le côté sortie de gaz de l'empilement de filets,
• introduire un gaz (6) contenant de l'ammoniac et de l'oxygène à une température dans le réacteur à écoulement (1) comprise entre 500 °C et 1 300 °C et à une pression comprise entre 0,1 MPa et 1,4 MPa.

11. Procédé selon la revendication 10, **caractérisé en ce qu'**un filet en métal précieux selon la revendication 5 ou 6 vient s'appliquer en tant que filet en métal précieux le plus extérieur sur le côté entrée de gaz de l'empilement de filets et est ainsi le premier des filets en métal précieux à être traversé par le gaz de réaction.

12. Procédé selon la revendication 10 ou 11, **caractérisé en ce qu'**un filet en métal précieux selon la revendication 9 vient s'appliquer en tant que filet en métal précieux le plus extérieur sur le côté sortie de gaz de l'empilement de filets catalytiques et est ainsi le dernier des filets catalytiques à être traversé par le gaz de réaction.

13. Procédé selon l'une ou plusieurs des revendications 10 à 12, **caractérisé en ce qu'**au moins un filet en métal précieux selon la revendication 7 ou 8 vient s'appliquer en tant que filet de type getter sur le côté sortie de gaz de l'empilement de filets en métal précieux et est ainsi traversé par le gaz de réaction après les filets catalytiques.
